# EUROPÄISCHE PATENTSCHRIFT

(11) **EP 2 978 602 B1**
(45) Veröffentlichungstag und Bekanntmachung des Hinweises auf die Patenterteilung: **20.09.2017**
(21) Anmeldenummer: 14713759.0
(22) Anmeldetag: 20.03.2014
(51) Int. Cl.: B32B 7/06, B32B 27/28, B32B 29/06, B32B 38/10, B32B 29/04

(54) **VERBUNDPLATTE**
COMPOSITE BOARD
PANNEAU COMPOSITE

(30) Priorität: 27.03.2013 DE 102013005242
(43) Veröffentlichungstag der Anmeldung: 03.02.2016
(73) Patentinhaber: Maria Soell GmbH, DE-63667 Nidda-Eichelsdorf (DE)
(72) Erfinder: FREY, Hanspeter, 47574 Goch (DE)
(74) Vertreter: Meyer-Dulheuer, Karl-Hermann
(86) Internationale Anmeldenummer: PCT/EP2014/000755
(87) Internationale Veröffentlichungsnummer: WO 2014/154334

(56) Entgegenhaltungen:
- AT-U1- 2 886

## Beschreibung

Die vorliegenden Erfindung betrifft ein Zwischenprodukt umfassend ggf. bis zumindest 100, in einer Pressvorrichtung angeordnete Dekoreinheiten, die jeweils zwischen zwei Pressblechen eine Einheit bilden aus
A) einem Mehrschichtverbund umfassend eine Schichtfolge aus
   (a) einer Dekorschicht, die ggf. eine Schutzschicht aufweisen kann,
   (b) mindestens eine Papierlage, vorzugsweise zwei bis zehn und besonders bevorzugt drei Papierlagen, jeweils ausgestattet mit wenigstens einem auszuhärtenden Kunststoffharz und
   (c) einer direkt an die Papierlagen (b) mit der nicht beschichteten Oberfläche angrenzenden, einseitig beschichteten Release-Papierlage und
B) einem zweiten Mehrschichtverbund, der mit seiner einseitig beschichteten Release-Papierlage (c') direkt an die Release-Papierlage (c) des ersten Mehrschichtverbundes angrenzt, umfassend eine Schichtfolge aus
   (c') einer direkt an die Papierlage (b') mit der nicht beschichteten Oberfläche angrenzenden, einseitig beschichteten Release-Papierlage,
   (b') mindestens eine Papierlage, vorzugsweise zwei bis zehn und besonders bevorzugt drei Papierlagen, jeweils ausgestattet mit einem auszuhärtenden Kunststoffharz,
   (a') einer Dekorschicht, die ggf. eine Schutzschicht aufweisen kann,
   wobei die Release-Schichten (c) und (c') jeweils aus wenigstens einem ausghärteten Polysiloxan aufgebaut sind,
eine mit einer solchen Release-Oberfläche ausgestattete Verbundplatte und ein Verfahren zum Aufbringen einer entsprechenden Dekorplatte auf einem Substrat.

Es ist bekannt, dass Verbundplatten mit Dekorschichten für zahlreiche Anwendungen, wie z. B. als Schutzplatten und/oder Dekorplatten für Möbel, wie z. B. Küchenmöbel, Wände oder Fußböden, eingesetzt werden können.

Solche Dekorverbundplatten werden vorzugsweise so hergestellt, dass auf eine Dekorschicht mehrere Papierlagen, imprägniert mit einem auszuhärtenden Kunststoffharz, aufgebracht werden, eine Trennfolie aus Polypropylen über die imprägnierten Papierlagen gelegt und darauf wieder mehrere Papierlagen, imprägniert mit einem auszuhärtenden Kunststoffharz, und als oberste eine Dekorschicht, vorzugsweise ein Dekorpapierbogen, aufgebracht werden. Dieser Aufbau wird zwischen zwei Pressblechen, vorzugsweise mit hochpolierten Oberflächen, unter einem erhöhten Druck von mindestens 3 - 10 N/mm² vorzugsweise 4 - 5 N/mm² und einer Temperaturerhöhung bis mindestens 100 °C zum Aushärten des Kunststoffharzes verpresst und anschließend abgekühlt. Bei dieser Herstellung können bis zu 100 solcher, jeweils zwischen zwei Pressblechen angeordnete Aufbauten unter Druck und Temperaturerhöhung in einer Pressvorrichtung unter Aushärtung des Kunststoffharzes zu Dekorplatten verpresst werden. Nachteilig bei dieser Vorgehensweise zur Herstellung von Dekorplatten ist, dass in einem separaten Arbeitsschritt die Polypropylen-Folien nicht nur eingelegt, sondern auch wieder entfernt werden müssen, bevor die verpressten Verbünde an der von der Dekoroberfläche abgewandten Oberfläche zum Verbinden mit dem jeweiligen Substrat, das mit der Dekorplatte ausgestattet werden muss, vorzugsweise mechanisch, aufgeraut werden.

Die Mitverwendung einer Folie als Polypropylen beim Pressvorgang unter Aushärtung ist aber unverzichtbar, da ansonsten jeder Aufbau einer Verbundplatte separat verpresst werden muss, was nicht nur eine deutliche Erhöhung des Herstellungsprozesses einer Dekorplatte, sondern auch eine erhebliche Steigerung der Herstellungskosten mit sich bringen würde.

Aus der AT 002 886 U1 ist ferner eine Verbundplatte zu Dekorzwecken bekannt, die aus einer Kunststoffplatte besteht, die einseitig mit einem Kleber beschichtet ist, welcher mit einem Trennpapier abgedeckt ist, und auf die anderseitig ein Dekorpapier mit einem in das Dekorpapier einfließenden Heißsiegelkleber aufgebracht ist. Mit diesem Aufbau soll eine selbstklebende und ohne Kantenbruch leicht zuschneidbare Dekorplatte erzielt werden.

Nachteilig bei dem bisherigen Herstellungsverfahren ist aber nach wie vor, dass ein zu den Dekorplatten artfremdes Material, nämlich eine Polypropylen-Folie, als Trennfolie eingelegt und nach Aushärtung der Schichtverbunde auch wieder vollständig entfernt werden muss, bevor die Dekorverbunde mit dem jeweiligen Substrat zum Endprodukt verbunden werden können.

Aufgabe der vorliegenden Erfindung war es daher, diese Nachteile des Standes der Technik zu beseitigen, um den Herstellungsprozess von Dekorplatten, basierend auf Mehrschichtverbunden, die über Aushärtung von Kunststoffharzen unter Druck und Temperaturerhöhung hergestellt werden, zu verbessern.

Diese Aufgabe wird durch Zurverfügungstellung eines Zwischenproduktes umfassend ggf. bis zumindest 100, in einer Pressvorrichtung angeordnete Dekoreinheiten, die jeweils zwischen zwei Pressblechen eine Einheit bilden aus
A) einem Mehrschichtverbund umfassend eine Schichtfolge aus
   (a) einer Dekorschicht, die ggf. eine Schutzschicht aufweisen kann,
   (b) mindestens eine Papierlage, vorzugsweise zwei bis zehn und besonders bevorzugt drei Papierlagen, jeweils ausgestattet mit wenigstens einem auszuhärtenden Kunststoffharz und
   (c) einer direkt an die Papierlagen (b) mit der nicht beschichteten Oberfläche angrenzenden, einseitig beschichteten Release-Papierlage und
B) einem zweiten Mehrschichtverbund, der mit seiner einseitig beschichteten Release-Papierlage (c') direkt an die Release-Papierlage (c) des ersten Mehrschichtverbundes angrenzt, umfassend eine Schichtfolge aus
   (c') einer direkt an die Papierlagen (b') mit der nicht beschichteten Oberfläche angrenzenden, einseitig beschichteten Release-Papierlage,
   (b') mindestens eine Papierlage, vorzugsweise zwei bis zehn und besonders bevorzugt drei Papierlagen, jeweils ausgestattet mit einem auszuhärtenden Kunststoffharz,
   (a') einer Dekorschicht, die ggf. eine Schutzschicht aufweisen kann, wobei die Release-Schichten (c) und (c') jeweils aus wenigstens einem ausgehärteten Polysiloxan aufgebaut sind,
gelöst.

Dieses Zwischenprodukt hat nicht nur den großen Vorteil, dass keine Polypropylen-Folien als Trennfolien eingesetzt werden und damit deren Entfernung entfällt, sondern dass anstelle der Polypropylen-Folie jeder Aufbau eines Mehrschichtverbundes, aus dem eine Dekorplatte letztendlich hergestellt wird, als Außenlagenschicht eine Papierlage aufweist, die einseitig mit einer aufgeführten Release-Beschichtung belegt ist. Diese einseitig mit einer aufgeführten Release-Beschichtung ausgerüstete Papierlage bleibt mit dem Mehrschichtverbund, dessen zweite Oberfläche mit der Dekorschicht ausgerüstet ist, verbunden, so dass die Separierung der jeweils zwischen zwei Pressblechen angeordneten Mehrschichtverbunde A) und B) mühelos durchgeführt werden kann. Darüber hinaus muss vor der erfindungsgemäßen Verwendung eines Mehrschichtverbundes A) bzw. B) bei der notwendigen Aufrauhung zur Verbindung der Dekorplatte mit einem Substrat im Prinzip nur die wenigen Mikrometer betragende Release-Beschichtung entfernt werden. Da vor dem Verbinden mit einem Substrat zum Auftragen einer dafür notwendigen Klebeschicht eine Aufrauhung der nicht mit einem Dekor versehenen, außenliegenden Papierlage sowieso notwendig ist, entfällt erfindungsgemäß auf jeden Fall ein Arbeitsschritt, nämlich die Entfernung der Polypropylen-Folie. Dies führt bei Zwischenprodukten, die bis zu 100 Einheiten von jeweils zwischen zwei Pressblechen angeordneten Mehrschichtverbunden A) und B) beim Pressvorgang zum Aushärten des zur Imprägnierung verwendeten Kunststoffharzes vorliegen haben, zu einer nicht zu vernachlässigenden Einsparung der Produktionszeiten und damit Produktionskosten.

Die Papierlagen (b) und (b') sind vorzugsweise mit wenigstens einem Phenol-Formaldehyd-Harz oder mit wenigstens einem Melamin-Formaldehyd-Harz als auszuhärtendes Imprägniermittel ausgerüstet. Die Papierlagen sind vorzugsweise Kraftpapierbögen mit einer Grammatur - ohne Imprägnierung - von 100 bis 300 g/m², vorzugsweise 140 bis 230 g/m². Pro Mehrschichtverbund können mindestens eine, vorzugsweise 2 bis 10 Papierlagen, übereinander geschichtet werden.

Jeder Mehrschichtverbund kann neben der Dekorschicht, die vorzugsweise ein Dekorpapierbogen ist, der mit beliebigen Motiven, vorzugsweise in einem Tiefdruckverfahren, bedruckt sein kann, oder die ein Furnier, vorzugsweise aus Holzblättern, ist oder eine Kunststofffolie, bedruckt mit beliebigen Motiven oder mit einer oder mehreren Farben bestrichen, ist, auch über der Dekorschicht eine vorzugsweise transparente Schutzbeschichtung, vorzugsweise aus transparentem Kunststoff, aufweisen, die gegen chemische und/oder physikalische Einflüsse schützt.

Jeder Mehrschichtverbund A) oder B) weist mindestens eine Papierlage, vorzugsweise zwei bis zehn Papierlagen, vorzugsweise aus den vorstehend genannten Kraftpapierbögen, auf.
Die Papierlagen können auch ein Polyester- oder Glasfasergewebe aufweisen. Diese Kraftpapierbögen sind vorzugsweise mit 25 bis 40 Gew.-%, besonders bevorzugt 28 bis 36 Gew.-% und ganz besonders bevorzugt mit 30 bis 34 Gew.-%, des auszuhärtenden Kunststoffharzes imprägniert, das nach dem Aushärten als Bindemittel zwischen den einzelnen Papierlagen, der Dekorpapierschicht sowie der mit der aufgeführten Release-Schicht ausgerüsteten Papierlage fungiert.

Die mit einer Release-Schicht versehene Papierlage, die als Außenschicht eines Mehrschichtverbundes A) bzw. B) vorliegt, basiert auf einem ausgehärteten Polysiloxan. Dieses Polysiloxan wird vorzugsweise als eine nicht ausgehärtete Polysiloxan-Emulsion enthaltend wenigstens ein auszuhärtendes Polysiloxan, wenigstens einen Vernetzer und einen üblichen Aushärtungskatalysator aufgetragen. Diese Polysiloxan-Emulsion hat vorzugsweise eine Viskosität gemessen in Anlehnung an DIN 53211 (mit einem Auslaufbecher mit einem Öffnungsdurchmesser von 6 mm) von > 15 sec, damit vorzugsweise die Eindringtiefe in die so ausgerüstete Papierlage gesteuert werden kann. Vorzugsweise wird die Polysiloxan-Emulsion durch thermische Aushärtung in eine ausgehärtete Polysiloxan-Beschichtung als Release-Beschichtung umgewandelt. Die Aushärtungsparameter sind dem Fachmann bekannt.

Das Auftragsgewicht dieser Polysiloxan-Beschichtung ist ≤ 3 g/m², vorzugsweise 0,5 - 1,5 g/m² und besonders bevorzugt 0,6 - 1,0 g/m². Damit wird gewährleistet, dass die Eindringtiefe ≤ 5 µm beträgt.

Besonders bevorzugt kann die zum Einsatz kommende Polysiloxan-Emulsion aus einer reaktiven Mischung aus a) einer vorgemischten Komponente aus einem Vinylgruppen aufweisenden Polysiloxan mit einem Si-H-Gruppen aufweisenden Vernetzer (40%) und Wasser (60%), b) einem Pt-Katalysator, in einem Vinylgruppen aufweisenden Polysiloxan verteilt, und c) einem Salz der Carboymethylcellulose, vorzugsweise Natrium-Carboxymethylcellulose, mit vorzugsweise einem Substitutionsgrad von 0,65 bis 0,95 als Verdickungsmittel durch thermische Aushärtung hergestellt werden.

Aus dem erfindungsgemäßen Zwischenprodukt lassen sich die zwischen zwei Pressblechen vorliegenden Einheiten aus einem ausgehärteten Mehrschichtverbund A) und einem ausgehärteten Mehrschichtverbund B) mühelos entlang der aufeinanderliegenden Release-Papierlagen (c) bzw. (c') trennen. Dies gilt für jede zwischen zwei Pressblechen ausgehärtete Einheit aus zwei Mehrschichtverbunden A) und B), die zur Aushärtung durch Verpressen und vorzugsweise Temperaturerhöhung mit bis zu 100 Einheiten in einer Pressvorrichtung angeordnet sind.

Die Verpressung aller jeweils zwischen zwei Pressblechen angeordneten Einheiten aus zwei Mehrschichtverbunden A) und B) erfolgt vorzugsweise bei einem Druck von wenigstens 4 N/mm², besonders bevorzugt wenigstens 5 N/mm². Dabei wird die Aushärtung der als Imprägnierung vorliegenden, auszuhärtenden Kunststoffharze, vorzugsweise wenigstens eines Melamin-Formaldehyd-Harzes bzw. eines Phenol-Formaldehyd-Harzes, bei einer Temperatur im Bereich von 110 bis 200 °C, vorzugsweise 120 bis 180 °C, durchgeführt. Bei diesen Temperaturen und den angegebenen Drucken ist im Allgemeinen eine Presszeit von wenigstens einer halben Stunde, vorzugsweise bis zu eineinhalb Stunden, ausreichend.

Ein weiterer Gegenstand der vorliegenden Erfindung sind daher auch ausgehärtete Mehrschichtverbunde A) bzw. B) aus jeweils verbundenen Schichten (a) bis (c) bzw. (a') bis (c'), die durch Aushärtung des zur Imprägnierung der Papierlagen (b) bzw. (b') eingesetzten Kunststoffharzes der Mehrschichtverbunde A) und B) aller Einheiten eines Zwischenproduktes unter Pressdruck und der angegebenen Temperaturen und durch anschließende Trennung der ausgehärteten Mehrschichtverbunde A) von den ausgehärteten Mehrschichtverbunden B) jeweils entlang der aufeinanderliegenden Release-Schichten (c) bzw. (c') die erfindungsgemäßen Mehrschichtverbunde erhalten wurden.

Ein weiterer Gegenstand der vorliegenden Erfindung ist die Herstellung eines Dekormehrschichtverbundes bzw. einer entsprechenden Dekorplatte, indem von dem vorstehend ausgehärteten Mehrschichtverbund A) bzw. B) jeweils die Release-Schicht (c) bzw. die Release-Schicht (c'), vorzugsweise durch mechanische Bearbeitung entfernt wird. Ein solcher Dekormehrschichtverbund bzw. eine solche Dekorplatte wird jeweils mit der aufgerauten Oberfläche mit einem Substrat, zu dessen Schutz bzw. Dekoration die Dekorplatte verwendet wird, mit Hilfe einer Klebstoffschicht verbunden.

Ein weiterer Gegenstand der vorliegenden Erfindung ist ein Verfahren zur Ausrüstung eines Substrates mit einem Dekormehrschichtverbund umfassend die Schritte:
1) Bereitstellung eines ausgehärteten Mehrschichtverbundes A) bzw. B) nach Anspruch 10,
2) Entfernung der Release-Schicht (c) bzw. der Release-Schicht (c') von dem jeweiligen ausgehärteten Mehrschichtverbund A) bzw. B) vorzugsweise durch mechanische Bearbeitung,
3) Beschichtung der so erhaltenen Oberfläche des Dekorverbundes mit einem Klebstoff und
4) Aufbringen und Verbinden des mit einem Klebstoff beschichteten Dekorverbundes auf ein Substrat.

Das Substrat kann ein Träger aus Holz, wie z. B. eine Spanplatte, Sperrholzplatte, Faserplatte, Hartfaserplatte, Tischlerplatte, Furnierplatte, Massivholzplatte sein, die z. B. als Dekorplatte bei Küchenmöbeln verwendet werden soll. Das Substrat kann aber auch eine Metallplatte, ein Blech oder eine Natur- oder Kunststofffliesen- oder Gipskartonplatte sein. Für die jeweiligen Substrate wird der Klebstoff selbstverständlich angepasst.

Ein weiterer Gegenstand der vorliegenden Erfindung ist daher ein Verfahren zum Ausrüsten eines Substrates, wie z. B. eines Substrates mit zumindest einer Oberfläche aus Holz, Metall, Kunststoff, Keramik oder Natur- oder Kunststein mit einer erfindungsgemäß hergestellten Dekorplatte.

## Patentansprüche

1. Ein Zwischenprodukt umfassend bis zumindest 100, übereinander in einer Pressvorrichtung angeordnete Dekoreinheiten, die jeweils zwischen zwei Pressblechen eine Einheit bilden aus
A) einem Mehrschichtverbund umfassend eine Schichtfolge aus
(a) einer Dekorschicht, die eine Schutzschicht aufweisen kann,
(b) mindestens eine Papierlage, vorzugsweise zwei bis zehn und besonders bevorzugt drei Papierlagen, jeweils ausgestattet mit wenigstens einem auszuhärtenden Kunststoffharz und
(c) einer direkt an die Papierlagen (b) mit der nicht beschichteten Oberfläche angrenzenden, einseitig beschichteten Release-Papierlage und
B) einem zweiten Mehrschichtverbund, der mit seiner einseitig beschichteten Release-Papierlage (c') direkt an die Release-Papierlage (c) des ersten Mehrschichtverbundes angrenzt, umfassend eine Schichtfolge aus
(c') einer direkt an die Papierlage (b') mit der nicht beschichteten Oberfläche angrenzenden, einseitig beschichteten Release-Papierlage,
(b') mindestens eine Papierlage, vorzugsweise zwei bis zehn und besonders bevorzugt drei Papierlagen, jeweils ausgestattet mit einem auszuhärtenden Kunststoffharz,
(a') einer Dekorschicht, die eine Schutzschicht aufweisen kann,
wobei die Release-Schichten (c) und (c') jeweils aus wenigstens einem ausgehärteten Polysiloxan aufgebaut sind.

2. Ein Zwischenprodukt nach Anspruch 1, **dadurch gekennzeichnet, dass** die beiden Release-Schichten (c) und (c') mit ihrer Release-Beschichtung direkt aneinandergrenzen.

3. Ein Zwischenprodukt nach einem der Ansprüche 1 oder 2, **dadurch gekennzeichnet, dass** die ausgehärtete Polysiloxan-Beschichtung ein Salz der Carboxymethylcellulose, vorzugsweise Natrium-Carboxymethylcellulose, enthält.

4. Ein Zwischenprodukt nach einem der Ansprüche 1 bis 3, **dadurch gekennzeichnet, dass** als auszuhärtendes Kunststoffharz ein Phenol-Formaldehyd-Harz oder Melamin-Formaldehyd-Harz als Imprägniermittel der Papierlagen (b) und (b') vorliegt.

5. Ein Zwischenprodukt nach einem der Ansprüche 1 bis 4, **dadurch gekennzeichnet, dass** die Papierlagen Kraftpapierbögen mit einer Grammatur ohne Imprägnierung von 100 bis 300 g/m², vorzugsweise von 140 bis 230 g/m², sind.

6. Ein Zwischenprodukt nach einem der Ansprüche 1 bis 5, **dadurch gekennzeichnet, dass** jeder Mehrschichtverbund A) bzw. B) bis zu 10 Papierlagen (b) bzw. (b') aufweisen kann.

7. Ein Zwischenprodukt nach einem der Ansprüche 1 bis 6, **dadurch gekennzeichnet, dass** die Papierlagen ein Polyester- oder Glasfasergewebe aufweisen können.

8. Ein Zwischenprodukt nach einem der Ansprüche 1 bis 7, **dadurch gekennzeichnet, dass** die Dekorschicht ein Dekorpapierbogen bedruckt mit beliebigen Motiven, vorzugsweise in einem Tiefdruckverfahren, oder ein Furnier, vorzugsweise aus Holzblättern, oder eine Kunststofffolie bedruckt mit beliebigen Motiven oder bestrichen mit einer oder mehreren Farben ist.

9. Ein Zwischenprodukt nach einem der Ansprüche 1 bis 8, **dadurch gekennzeichnet, dass** die Dekorschicht mit einer, vorzugsweise transparenten, Beschichtung, vorzugsweise aus transparentem Kunststoff, zum Schutz gegen chemische und/oder physikalische Einflüsse ausgerüstet ist.

10. Ausgehärtete Mehrschichtverbunde aus jeweils verbundenen Schichten (a) bis (c) bzw. (a') bis (c'), die durch Aushärtung des zur Imprägnierung der Papierlagen (b) bzw. (b') eingesetzten Kunststoffharzes der Mehrschichtverbunde A) und B) aller Einheiten eines Zwischenproduktes nach einem der Ansprüche 1 bis 9 unter Pressdruck- und Temperatur-Erhöhung und jeweils durch anschließende Trennung des ausgehärteten Mehrschichtverbundes A) von dem ausgehärteten Mehrschichtverbund B) jeweils entlang der aneinandergrenzenden Release-Schicht (c) bzw. (c') erhalten wurden.

11. Ein Verfahren zur Ausrüstung eines Substrates mit einem Dekormehrschichtverbund umfassend die Schritte:
1) Bereitstellung eines ausgehärteten Mehrschichtverbundes A) bzw. B) nach Anspruch 10,
2) Entfernung der Release-Schicht (c) bzw. der Release-Schicht (c') von dem jeweiligen ausgehärteten Mehrschichtverbund A) bzw. B) vorzugsweise durch mechanische Bearbeitung,
3) Beschichtung der so erhaltenen Oberfläche des Dekorverbundes mit einem Klebstoff und
4) Aufbringen und Verbinden des mit einem Klebstoff beschichteten Dekorverbundes auf ein Substrat.

12. Ein Verfahren nach Anspruch 11, **dadurch gekennzeichnet, dass** das Substrat zumindest eine Oberfläche aus Holz, Metall, Kunststoff, Keramik oder Natur- oder Kunststein aufweist.

## Claims

1. An intermediate product consisting of at least 100 décor units arranged on top of each other in a pressing device which form a unit between two press plates from
A) a multi-layered composite comprising a layer sequence made of
(a) a décor layer which may have a protective layer,
(b) at least one paper layer, preferably two to ten and most preferably three paper layers, each of them equipped with at least one curing synthetic resin, and
(c) a one-sided coated release-paper layer directly adjoining the paper layers (b) with a non-coated surface, and
B) a second multi-layered composite which adjoins directly with its one-sided coated release-paper layer (c') the release-paper layer (c) of the first multi-layered composite, consisting of a layer sequence made of
(c') a one-sided coated layer of release-paper adjoining directly the paper layer with the non-coated surface,
(b') at least one paper layer, preferably two to ten and most preferably three paper layers, each of them equipped with at least one curing synthetic resin,
(a') a décor layer that shows some protective coating whereby the release-layers (c) and (c') are provided with at least one cured polysiloxane.

2. An intermediate product according to claim 1, **characterised by the fact** that both release-layers (c) and (c') are joined directly to each other with their release layers.

3. An intermediary product according to claims 1 or 2, **characterised by the fact** that the cured polysiloxane coating contains a salt of carboxymethyl cellulose, preferably sodium carboxy-methyl cellulose.

4. An intermediary product according to the claims 1 to 3, **characterised by the fact** that a phenol-formaldehyde resin or melamine-formaldehyde is used as a curing impregnating agent of the paper layers (b) and (b').

5. An intermediary product according to the claims 1 to 4, **characterised by the fact** that the paper layers are sheets of kraft paper with a grammage without impregnation of 100 to 300 g/m², preferably from 140 to 230 g/m².

6. An intermediary product according to claims 1 to 5, **characterised by the fact** that each multi-layered composite A) resp. B) may show up to 10 layers of paper (b) or (b').

7. An intermediary product acc. to claims 1 to 6, **characterised by** the fact that the paper layers have a polyester or fibreglass fabric.

8. An intermediary product according to claims 1 to 7, **characterised by** the fact that the decorative layer is a decorative paper sheet printed with random motives, preferably in intaglio printing, or a veneer, preferably made from wooden sheets, or a plastic foil printed with random motives or painted in one or several colours.

9. An intermediary product according to claims 1 to 8, **characterised by the fact** that the decorative layer is equipped primarily with a preferably transparent coating, preferably made from transparent plastic, for protection against chemical and/or physical influences.

10. Cured multi-layered composites made from composite layers (a) to (c) or (a') to (c') which were created by way of curing the polyester resin used for impregnating the paper layers (b) or (b') of the multi-layered composites A) and B) of all units of an intermediary product according to claims 1 to 9 by increasing the pressure and temperature and in each case through subsequent separation of the cured multi-layered composite A) from the cured multi-layered composite B) along the adjoining release-layer (c) or (c').

11. The process for equipping a substrate with a decorative multi-layered composite comprises the following steps:
1) Provision of a cured multi-layered composite A) or B) according to claim 10,
2) Removing the release layer (c) from the respective cured multi-layered composite A) or B), preferably by way of a mechanical process,
3) Coating of the thus achieved surface of the decorative composite with some glue, and
4) Applying and attaching the decorative composite which is coated with some glue to a substrate.

12. A process according to claim 11, **characterised by** the fact that the substrate must have at least a surface of wood, metal, plastic, ceramic or natural or artificial stone.

## Revendications

1. Un produit intermédiaire comprenant jusqu'à 100 unités de décor superposées dans un dispositif de compression, formant respectivement une unité entre deux plaques métalliques de presse à partir de :
A) une composite à plusieurs couches comprenant une suite de couches composées de
(a) un revêtement décoratif pouvant comporter une couche de protection,
(b) au moins une feuille de papier, de préférence deux à dix, et de façon particulièrement préférée trois feuilles de papier, respectivement pourvues d'au moins une résine synthétique à durcir et
(c) une feuille de papier protecteur (« Release ») revêtue sur une seule face qui borde directement les feuilles de papier (b) avec la surface non-revêtue et
B) un second composite à plusieurs couches qui, avec sa feuille de papier Release revêtue sur une seule face (c') borde directement la feuille de papier Release (c) du premier composite à plusieurs couches, comprenant une suite de couches composées de
(c') une feuille de papier Release revêtue sur une seule face, qui borde directement la feuille de papier (b') avec la surface non-revêtue,
(b') au moins une feuille de papier, de préférence deux à dix, et de façon particulièrement préférée trois feuilles de papier, respectivement pourvues d'une résine synthétique à durcir,
(a') un revêtement décoratif pouvant présenter une couche de protection, les couches Release (c) et (c') étant respectivement construites à partir d'au moins un polysiloxane durci.

2. Un produit intermédiaire selon la revendication 1, **caractérisé en ce que** les deux couches Release (c) et (c') se touchent directement avec leur revêtement Release.

3. Un produit intermédiaire selon l'une des revendications 1 ou 2, **caractérisé en ce que** le revêtement de polysiloxane durci contient un sel de carboxyméthylcellulose, de préférence de carboxyméthylcellulose de sodium.

4. Un produit intermédiaire selon l'une des revendications 1 à 3, **caractérisé en ce qu'**en tant de résine synthétique à durcir, une résine phénol-formaldéhyde ou une résine de mélamine-formaldéhyde est utilisée en tant qu'agent d'imprégnation des feuilles de papier (b) et (b').

5. Un produit intermédiaire selon l'une des revendications 1 à 4, **caractérisé en ce que** les feuilles de papier sont du papier kraft ayant un grammage sans imprégnation de 100 à 300 g/m², de préférence de 140 à 230 g/m²,

6. Un produit intermédiaire selon l'une des revendications 1 à 5, **caractérisé en ce que** chaque composite à plusieurs couches A) ou B) peut comprendre jusqu'à 10 feuilles de papier (b) ou (b').

7. Un produit intermédiaire selon l'une des revendications 1 à 6, **caractérisé en ce que** les feuilles de papier peuvent comprendre un tissu en polyester ou en fibres de verre.

8. Un produit intermédiaire selon l'une des revendications 1 à 7, **caractérisé en ce que** le revêtement décoratif est une feuille de papier décoratif imprimé avec différents motifs, de préférence réalisé en héliogravure ou un placage, de préférence en panneaux en bois, ou un film plastique avec différents motifs imprimés dessus ou sur lequel une ou plusieurs couleurs ont été appliquées.

9. Un produit intermédiaire selon l'une des revendications 1 à 8, **caractérisé en ce que** le revêtement décoratif est muni d'un revêtement, de préférence transparent, de préférence en matière plastique transparente, en tant que protection contre des influences chimiques et/ou physiques.

10. Composites durcis à plusieurs couches, respectivement composés de plusieurs couches liées (a) à (c) ou (a') à (c'), ayant été obtenues par le durcissement de la résine plastique employée pour l'imprégnation des feuilles de papier (b) ou (b') des composites à plusieurs couches A) et B) de toutes les unités d'un produit intermédiaire selon l'une des revendications 1 à 9 par l'augmentation de la pression et de la température et par la séparation subséquente du composite à plusieurs couches durci A) du composite à plusieurs couches durci B), respectivement le long des couches Release (c) ou (c') qui se touchent.

11. Un procédé d'équipement d'un substrat avec un composite à plusieurs couches décoratives comprenant les étapes suivantes :
1) Mise à disposition d'un composite à plusieurs couches durci A) ou B) selon la revendication 10,
2) Enlèvement de la couche Release (c) ou de la couche Release (c') du composite à plusieurs couches durci respectif A) ou B), de préférence par un procédé mécanique,
3) Revêtement de la surface du composite à plusieurs couches ainsi obtenue avec un adhésif et
4) Application et combinaison du composite à plusieurs couches revêtu d'adhésif avec le substrat.

12. Un procédé selon la revendication 11, **caractérisé en ce que** le substrat présente au moins une surface en bois, métal, matière plastique, céramique ou en pierre naturelle ou artificielle.
